# EUROPEAN PATENT APPLICATION

(11) **EP 0 558 349 A1**
(43) Date of publication of application: **01.09.1993**
(21) Application number: 93301502.6
(22) Date of filing: 26.02.1993
(51) Int. Cl.: H05B 37/02, H02J 13/00

(54) **Control of lighting ETC circuits**

(30) Priority: 26.02.1992 GB 9204129
(71) Applicant: LEGRAND ELECTRIC LIMITED (Reg. no. 2769820), Dunstable, Bedfordshire LU5 5TA (GB)
(72) Inventor: Hart,David Anthony, Dunstan,nr.Stafford,ST18 9AD (GB)
(74) Representative: Richards, David John

(57) **Abstract**

Mains electrical lighting installation control system has intermediate control units (200) between central (100) and local (300) control units, all microprocessor-based. Each local control unit (300) is programmable for immediate control of associated lighting circuits (at 308). Each intermediate control unit (200) is programmable for control common to plural associated local control units (110) over a communication provision (210). The central control unit (100) is programmed for control functions to the intermediate control units (200) over another communication provision (110). Devolved control at intermediate level (at 200) facilitates optimisation so all control units (100,110,200,210,300) cooperate in operation of the electrical lighting circuits (308) with lighting circuit response time less than for all direct and referred control at a central control unit.

## Description

This invention relates to control of mains electrical circuits, particularly but not exclusively lighting circuits.

It is useful and desirable to be able to provide a range of ways in which at least electrical lighting circuits can be controlled, whether according to overall building or site requirements or desiderata (hereinafter called "parameters"), or further according to particular parameters for floors or other zones of overall buildings or sites, or yet further according to specific parameters for constituent areas of such floors or other zones. Time of day, ambient natural light, occupancy, etc are conditions to be considered amongst such parameters, as are provisions for over-rides of such conditions. For example, power consumption can be substantially reduced if lights etc are switched off when space concerned is not occupied by any person, say after a preset interval following last detection of occupant presence/movement; and that can be done using passive infra-red or other occupancy sensors. Convenience, of course, dictates that such lights etc be switched back on automatically at next sensing of occupancy. Moreover, occupancy-sensing control is often usefully over-ridden, for example to switch lights 'off' in a room or space where slide projectors or video recorders and monitors are in use, and/or to switch lights 'on' in a corridor or other common space when there is any occupancy anywhere in related space or otherwise.

Our pending PCT application No GB88/01055 proposes a highly versatile local circuits controller that is capable of remote control and of local control for refinement of operation of circuits served and of signalling data concerning circuit operation and/or presence detection etc to a central controller. It is, of course, convenient for such a central controller to be of programmed computer type, preferably (for economy) of so-called microprocessor PC type as widely used and available at low costs for a wide range of computing and control purposes. It is an object of this invention to further the use of program-controlled computer or microprocessor type apparatus, but to do so without running into the sort of problems we have now identified as arising from effectively requiring each light etc, or slaved sets thereof, to be controlled directly by and thus have access to a central control computer unit. Amongst those problems are achievement of a satisfactory response time, which should be short enough to avoid giving rise to users' doubts as to whether the system is operating properly, and avoidance of undue expense, whether in terms of wiring for signalling purposes or in terms of unduly expensive central computers of mainframe or minicomputer types.

According to one aspect of this invention, there is provided microprocessor-controlled local units that service electrical circuits associated therewith usually in an area representing part of space serviced by an overall electrical installation, at least one microprocessor-controlled intermediate unit that serves by communication with associated said local control units in such service by the latter within a greater area or zone of said overall installation, and a preferably microprocessor-based central computer unit that serves by communication with at least said intermediate unit, usually a plurality thereof, in operation of the latter and said service by said local units.

It is highly advantageous to have an intermediate level of delegated or devolved programmed or programmable control, for a lighting installation, that is between what can be or is provided at the local control units (typically each serving at least two channels of lighting circuits), and what must be or sensibly is retained at the central control unit. One optimised approach is to have local. control units capable of handling those functions (or modifications of received control signals) truly local to the lighting circuits or channels of lighting circuits directly controlled, including overrides (for example in response to presence sensing by passive detectors or ambient light detection, or a function forced by active devices); to have each of the intermediate control units capable of handling all functions truly common for the local control units for the area concerned (for example further and common ambient light and/or presence detection and/or forced conditions whether as overrides or enables for local control units concerned); to have the central control unit handle all functions that are truly global to the whole installation (for example as to time and functions available at different times, ultimate overall status monitoring and record keeping, and perhaps some overrides and enables); but to allow at least a sharing out of certain control etc functions/actions between the central control unit and the intermediate control units so as to obtain satisfactory operation and response times for all those units.

In practice, requirements for individual installations will vary substantially, both as to what is truly global and what is required in and/or can be considered common for areas served by intermediate control units. It can be particularly advantageous for capabilities of intermediate control units to overlap those of the central control unit, and decide, and configure for, which does what relative to and within each installation as a matter of optimisation.

It is feasible for the central control unit to have inherent capability to do at least some, indeed anything up to all, of what can be delegated or devolved to programmed control at intermediate control units, even to treat individual intermediate control units of the same overall installation differently as to actual delegation/ devolvence, but never for the central control unit to have a greater operative control load than it can handle comfortably. That facilitates standardising intermediate units at ultimate function control capabilities less than or subsidiary to those for the central control unit, say including at least modifications or expansions of global parameters from the central control unit, but adequate for most requirements, then with only least expected individual function requirements done by the central control unit rather than the intermediate control unit concerned.

It is even possible for the central control unit, or an intermediate control unit typically at, the behest of the central unit), to include direct control capability for local control units, again on a special-only or not normally used basis. Indeed, such hierarchical control unit arrangement with overlapping control capability is particularly readily programmed for optional or required operation on an interrupt basis at least from the central control unit to or effectively through the intermediate units, whether directly or via intermediate control unit provisions.

A particularly suitable and preferred central control unit is of the well-known PC-type, and communicates serially with the or each intermediate unit, say over simple twisted-pair wiring. At least then, a particularly suitable and preferred microprocessor-based intermediate unit has at least some of immediately usable control program material held in storage local thereto, preferably installed therein, say at system set-up or commissioning or reconfiguration/modification, and usually by operation of the central control unit. That is conveniently done utilising so-called RAM memory provisions of the intermediate unit(s), preferably of so-called "static" or non-volatile type so as not to need re-writing and/or refreshing on a continuing maintenance basis by the central control unit, say even in the event of power failure (for which purpose the or each intermediate unit can usefully include stand-by battery back-up provision).

Such an intermediate unit can usefully and conveniently include both of co-called ROM (read-only-memory) and RAM (read/write) provisions, say together with a communications de-multiplexor for data/instruction bussing between the microprocessor and its related memory provisions, often also decoding means. Other intermediate unit provisions can include serial interfacing control for signals from the central control unit to the intermediate unit concerned or even going directly to local units; and/or input/output expander porting provisions, say relative to various inputs from sensors such as photocell detectors, load-shedding requirement indicators, emergency-lighting required or to be tested, etc. So-called "watch-dog" provisions will also be normal.

Preferred embodiments of intermediate units service up to four or more networks of local units hereof, or equivalent thereto, and include decoding for microprocessor outputs relative to signal generators for such networks.

Effectively, then, certain overall installation or global parameters and/or functions or availabilities thereof can be defined at and by the central control unit, and plural intermediate units can each refine and/or modify or add to such parameters etc in order to further define related greater area capabilities and requirements, say for a floor or tenant of a building; local units then serving for yet further refinement relative to controlled circuits of its channels.

A particularly suitable and preferred microprocessor-based local control unit has writable and rewritable memory provision that is further preferably of so-called permanent or non-volatile type as represented by what is nowadays well-known as EEPROM semiconductor integrated circuits or chips. Such local units represent a way of avoiding manual selection by switches as specifically described in our above-mentioned pending PCT Application for the purpose of final refinement of controlled operation of circuits associated with each local unit, and security of such refinement against change except by replacing or reprogramming an EEPROM chip.

Indeed, such a local unit for two or more channels of controlled electrical circuits constitutes another aspect of this invention by way of having a microprocessor to receive remote control signals and local parameter-response signals, and to provide control signals through line-driver provisions for said controlled electrical circuits; and rewritable memory means establishing service according to a selection from a range of possibilities for the controlled electrical circuits. Preferably, there is provision for transmission of signals from the local unit representing operation of said controlled electrical circuits and/or of sensors etc involved in parameter-setting for such circuits.

A typical such local control unit will have up to six or more inputs from normal switches of the electrical circuits and/or presence-detectors and/or over-ride devices, etc; and up to four or more relay driver means for at least two channels of controlled electrical circuits, normally lighting, together with any required or desired drive signal buffering means. Often, there will be provision of so-called "watch-dog" means, say causing re-setting of the microprocessor in the event of any protracted period of at least apparent inactivity.

Specific implementation for this invention will now be described, by way of example, with reference to the accompanying drawings, in which:
Figure 1 is a simplified outline block diagram of an overall system;
Figure 2 is a block circuit diagram of an intermediate control unit;
Figure 3 is a block circuit diagram of a local control unit, together with a typical power supply as Figure 3A, with flow diagram and input/output block as Figures 3B and 3C;
Figures 4 and 5 are further system block apparatus and functional organisation diagrams; and
Figure 6 is a related program flow diagram.

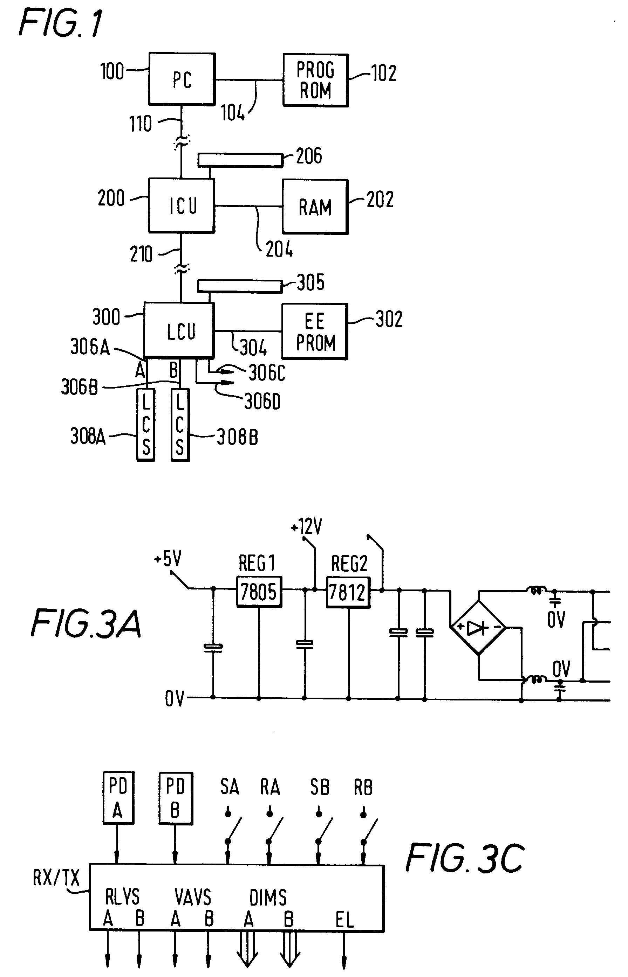

Referring first to Figure 1, a central control unit 100 comprises a computer that may be of IBM PC AT or equivalent or otherwise suitable type, and associated read-only program memory 102 with bus communication 104 between them. Output is shown at 110 and will usually be by way of a serial interface onto two-line wiring to at least one intermediate control unit 200, usually several, feasibly up to thirty two or more. Each intermediate control unit 200 will be microprocessor based and has associated readable and writable memory (RAM) 202 with bus communication 204 between them. The memory 202 will normally be at least capable of being loaded from the central control unit 100, though a specific port 206 is shown for use by a portable computer, say of lap-top type. Contents of the memory 202 will include program material and/or data that frees the central control unit 100 from much up to all monitoring and control activity that can be handled by the intermediate unit 200.

Output is shown at 210 and will again usually be by way of a serial interface onto two-line wiring to at least one local control unit 300, usually several, feasibly also up to one hundred or more.

Each local control unit 300 will also be microprocessor based and has associated readable memory 302 with bus communication 304 between them. The memory 302 may not normally be capable of being loaded from the intermediate control unit 200. Rather, it will normally be pre-loaded according to requirements, or feasibly loaded on site, at installation/commissioning, through a specific port 305 for a portable computer or memory chip writer. The memory 302 will contain program material and/or data that specifies precisely what control possibilities are permitted for at least two channels 306A,B of controlled electrical circuits, normally lighting circuits usually over suitable driver outputs 308A,B. Other controlled circuits or functions can be achieved over further driver outputs 308C,D. The contents of the memory 302 and operation of the local control unit is such as to free the central and intermediate control units (100,200) of much, up to all, monitoring and control activity that can be handled by the local unit (300).

This hierarchical arrangement of microprocessor-based hardware including memory involved in program control, is highly effective, and at low cost, in ensuring acceptably fast response of local controlled circuits by way of the local control units (300) and also ensuring that both of overall system requirements set by the central control unit (100) and floor/tenant or whatever system requirements set by the intermediate units (200) are all also met.

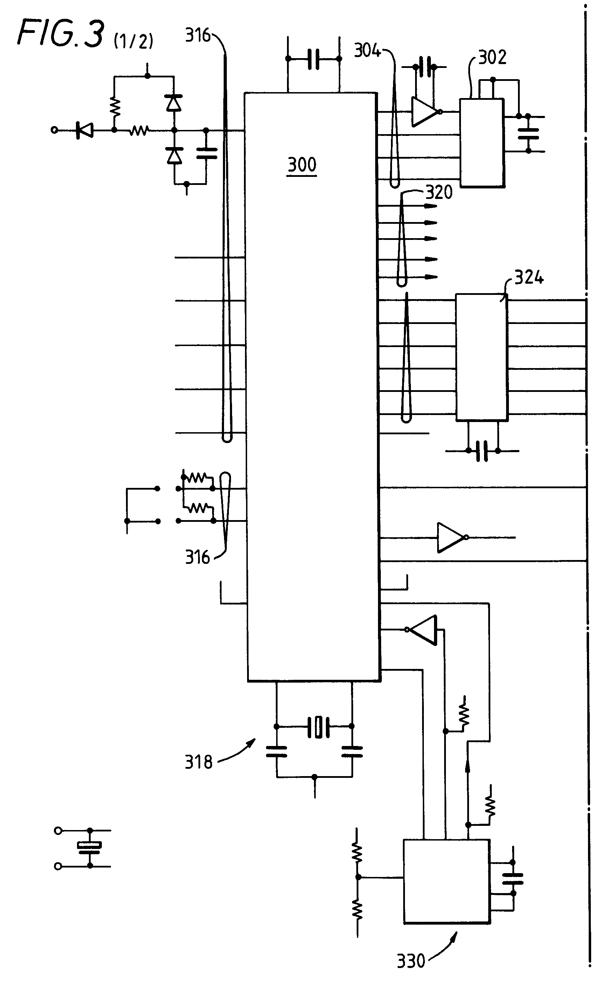

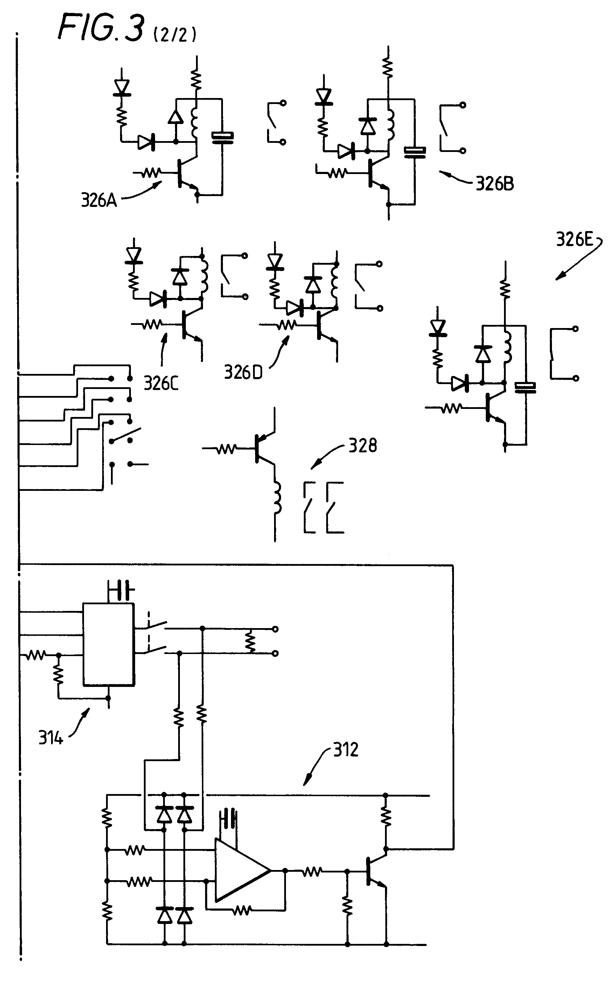

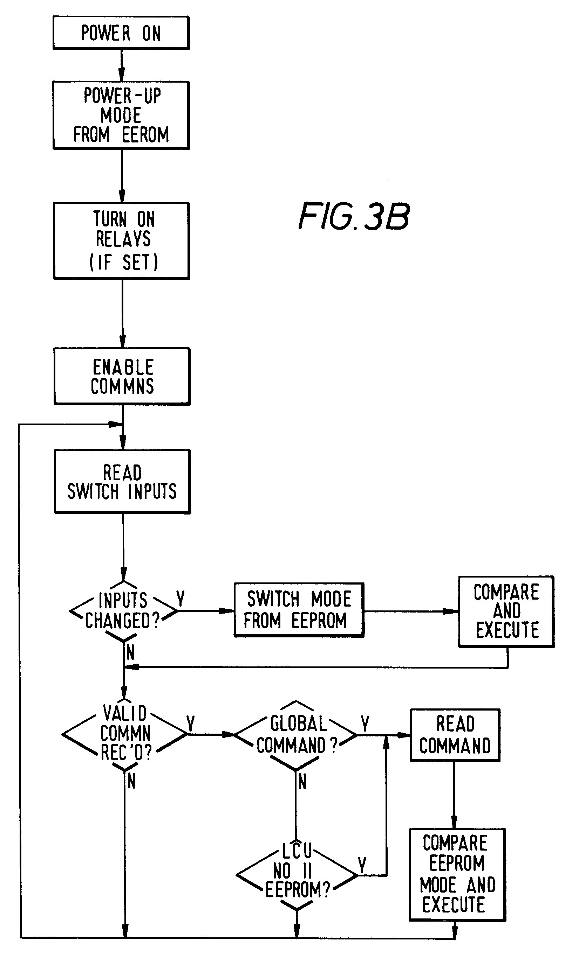

It is convenient to go next to Figure 3 and local control units each shown using a microprocessor 300 and related EEPROM memory 302 plus communication bussing 304. Figure 3 additionally shows a receiver section 312 for signals from the associated intermediate unit (200) or even directly from the associated central control unit (100). As shown, serial reception will be the norm, and further provision 314 is made for transmission, again either via the associated intermediate unit (200) or, and most times preferably, directly to the central control unit (100) even if actually tracked physically through the intermediate unit (200). Inputs 316 serve for local parameter sensing and application can be such as to give the same or different options compared with what is done in our aforementioned pending PCT application. Two spare inputs are indicated at 316S, and basic clocking for local operation at 318. The output system indicated at 306 in Figure 1 is shown as comprising lines 320 and 322, the latter going to a line driver buffer provision 324. Individual line drivers are shown at 326A,B,C,D for two channels of lighting circuits and other controlled circuits, respectively; and a further line driver 326E is shown for preferred use specifically in relation to testing emergency lighting. Also shown is a line driver isolator provision 328 that will be operative until the microprocessor 300 indicates reception of valid signals, and watchdog provision 330 operative to reset the microprocessor 300 in certain circumstances including apparent inactivity for more than prescribed time. Figure 3A indicates a power supply individual to each local control unit (100).

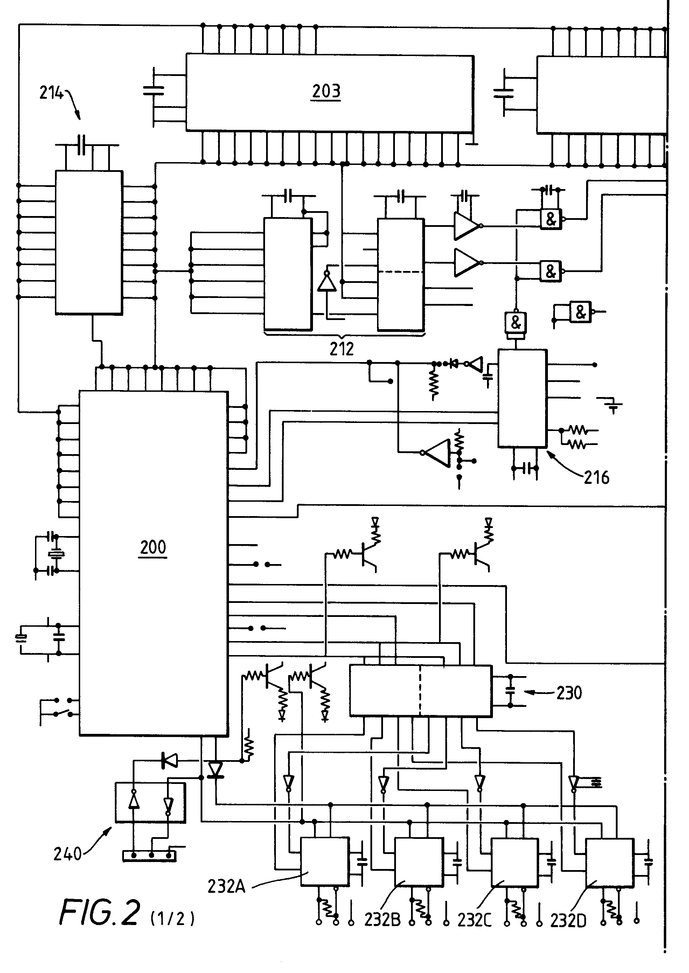

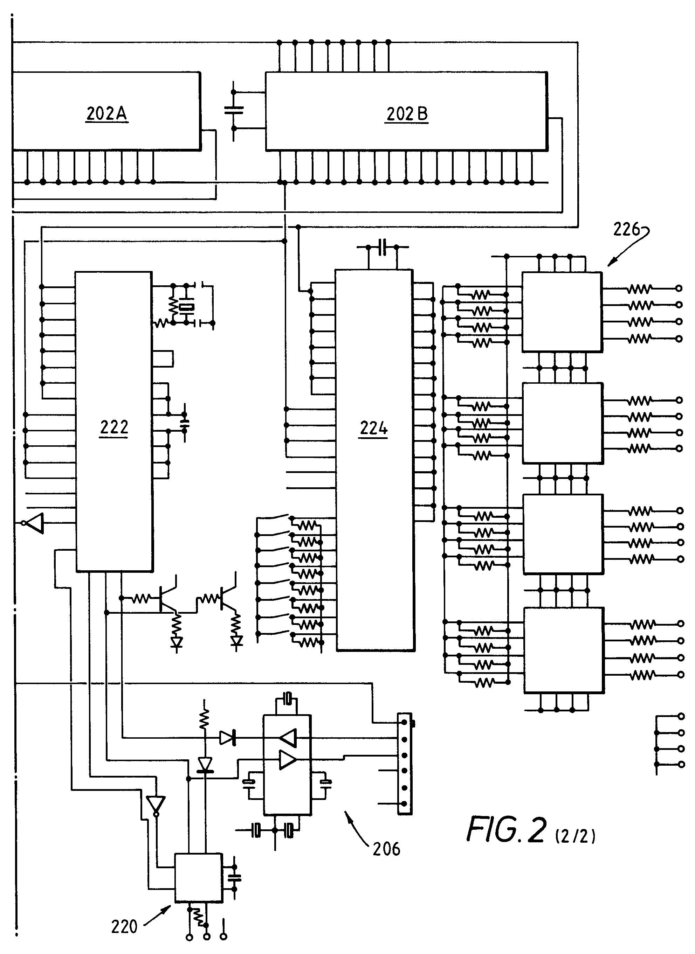

Turning to Figure 2 and intermediate units, each is shown with its microprocessor 200 and RAM provision by way of two chips 202A,B. Additional ROM 203 is also shown together with bussing 204 and related decoding(212) and demultiplexing (214) provisions. Watchdog provision is indicated at 216. Serial reception of signals from the central control unit (100) is indicated at 220 together with related serial interface provision at 222 also servicing any inputs from the port 206 for direct computer inputs. Input/output from expander port provision is shown at 224, together with stages 226 for input of greater area/zone parameter signals, say from photocells, timers, load shedding required, whatever means. Output signal provisions previously referenced 210 in Figure 1 are shown in greater detail as comprising a decoder 230 for the various channels served or serviceable by each local control unit (300) (and actually four as described, corresponding to drivers 326A-D), and individual signal providers 232A-D. The provision at 240 is intended only for manufacturer's test purposes and may be omitted or removed as supplied to site.

In a particular practical implementation, each local control unit (300) has two inputs for presence detectors (PDA, PDB - one for each lighting circuit channel A, B) and four inputs controlled by manual switches; and outputs comprising one each for lighting circuits of each channel (or relays therefor A, B), two further relays (VAVA, VAVB), and a relay for emergency lighting, also two three-line control outputs for seven levels of dimmer action (DA, DB). The four input manual switches (SA, RA, SB, RB) serve individually to set and reset the two lighting relays (A, B) when closed momentarily; and, if held closed, set switches (SA, SB) will lead to increasing the value of the corresponding dimmer control output (DA, DB), and the reset switch (RA, RB) will lead to decreasing such dimmer value.

The two further relays (VAVA, VAVB) can usefully be of voltage-free type and used to control air circulation, particularly where air conditioning is installed in a controlled building, and can be separately operated or slaved to operate with the lighting circuits relays (A, B).

Communications for control signals to the local control units (300) and for operation data from the local control units (300) is by way of a single twisted pair that is normally screened and goes to the intermediate unit (200) concerned, specifically to one network output thereof (see below) and there may be up to 100 or more local control units on each network.

Each local control unit (300) will respond to its own presence detectors and switch controlled inputs, and each of its relays (AB, VAVA, VAVB) can be operated from any related input or by control signals representing other events. Local programming (in EEPROM) includes installing a network number that identifies both the network concerned and the local control unit individually in that network and permits individual interrogation. Assigning a local control unit (300) to a group allows other than stand alone operation by presence detectors and local switches. Once assigned to a group, changes for one local control unit (300) can and normally do affect all other local control units in that group e.g. turning on by any presence detector. Lighting circuits relays (A,B) can be assigned to different groups. It is practical for group interdependence to be "on" both for any active presence detector and any local control unit switch and "off" both for any presence detector timing out or any switch being turned off.

Local unit programming (in EEPROM) extends further to assignment to photocell groups (see below for the intermediate control units 200), say for a photocell group to be "on" or "off" under photocell control unless the local control units concerned are off for other reasons. Also, time delays for presence detector response can be locally programmed, as can availability of "silent running" (which is a local control unit mode where presence detector operation is signalled back to the central control unit 100 but lighting circuits are not operated thus allowing intruders to be tracked secretly).

A fail safe mode can also be provided so that if expected continuous polling by an intermediate control unit (100) ceases for a given period, say 30 seconds, the local control unit (300) will go into an operating mode controlled only by its presence detectors, switches and related stored programming.

Figure 3C shows inputs and outputs for such a local control unit (300), and Figure 3B shows a related flow diagram for microprocessor-based operation. The flow diagram is largely self-explanatory, and demonstrates some of contents of the EEPROM by reference to extracting power-up and switch reading modes, also comparison of stored identifier numbers and permitted output modes, other read, and execute operations, and a basic valid communications received test. Also in one practical implementation, each intermediate control unit (200), typically for a floor of a building (but not necessarily so), will have up to ten or more inputs from photocells, up to six or more inputs for specifying load shedding requirements and switching to local generator operation, and up to four or more further inputs for specifying particular functions including disabling "silent running" mode of local control units (300), initiating emergency lighting test, initiating presence detector testing, and forcing all local control units to be in an "on" state (say until a control switch is opened). Each intermediate control unit (200) will further have communication input/outputs, specifically one for the central control unit (100) and four for controlled networks of local control units (300). It will be appreciated that at least the further inputs can be under control of manual switches at the intermediate unit or controlled by signals from the central control unit (100).

It is convenient for only one intermediate control unit to be involved in load shedding/local generator specification (as such requirement will normally mean a mains supply failure). Indeed, it is envisaged that such a "leading" intermediate control unit could mainly serve that purpose and not have the further inputs at all, i.e. so that all intermediate units have only six inputs additional to their photocell inputs. Being able to deactivate "silent running" allows security patrols of the area controlled by the intermediate control unit (200) concerned without causing unnecessary alerts. Emergency lights testing will operate the emergency lighting relay of each controlled local unit (100) and deactivate its lighting channel relays (A,B); and presence testing can assert a prescribed time delay, say up to 20 seconds or more for all local control units concerned. Limiting the number of intermediate control units (200) that can be served by only one central control unit to thirty two is considered practical.

The intermediate control units (200) each operate in continuous repeating polling cycles for the local control units (300) in their networks, both to collect data as to their state and presence detector operation, and to broadcast data to the local control units (300). The intermediate control units (200) are connected together over a twisted pair and to the central control unit (100) which polls the intermediate control units for data collection and instruction broadcasting. Each intermediate control unit (200) can be assigned a number or address so that it can be individually interrogated by the central control unit (100).

Further in a practical implementation, the central control unit (100) normally has associated display for layouts of areas (usually floors) controlled by each intermediate control unit (200), also for individual networks thereof, and further for each of local control units (300) even individual channels thereof. Related monitoring, alarms and data logging can be provided, as well as group control (whether manually, say from a keyboard, or on a timed basis). In addition, the central control unit (100) will be able to re-assign local control units between networks and groups (including photocell groups) by action including altering RAM at the intermediate control unit (200).

Generally, each local control unit can be a member of up to four or more groups, though only one such group will normally be active at any one time. This facility allows varying proportions, say 25% to 100% of lighting to be available depending on time of day or ambient light or linking with corridor, landing, stairway etc. lighting.

It is envisaged that the central control unit (100) can go beyond setting up and altering RAM at the intermediate units (100), specifically alter EEPROM at local control units (300) typically by display and mouse control. Linking between groups is particularly useful, say to ensure that prescribed intervals apply to turning off some lights after others go off, e.g. car park after stairs after corridors after offices, so that linking need not be from any one group to more than one other group.

Presence detector monitoring including individually, and "silent running" modes are specifiable from the central control unit (100) and related graphics assist display etc. Luminaire actual operated life can be logged and replacement estimated.

Local generator operation and/or return to mains lighting after a power failure is preferably done under automatic control, both to ensure levels of lighting and numbers of luminaires operating that match generator capacity and to phase lighting in to avoid power-up problems. Basic preferred operation is for the central control unit to read states of generator inputs from the 'leading' intermediate control unit, then output one of the six permitted levels of lighting to all the intermediate control units (200) to operate the local control units (300) correspondingly. Because that must take time, often of the order of one minute, it is further preferred that one of the permitted levels (the lowest) effectively be preprogrammed into some local control units (in EEPROM) so that selected channels light up immediately and the decided appropriate lighting level follows later.

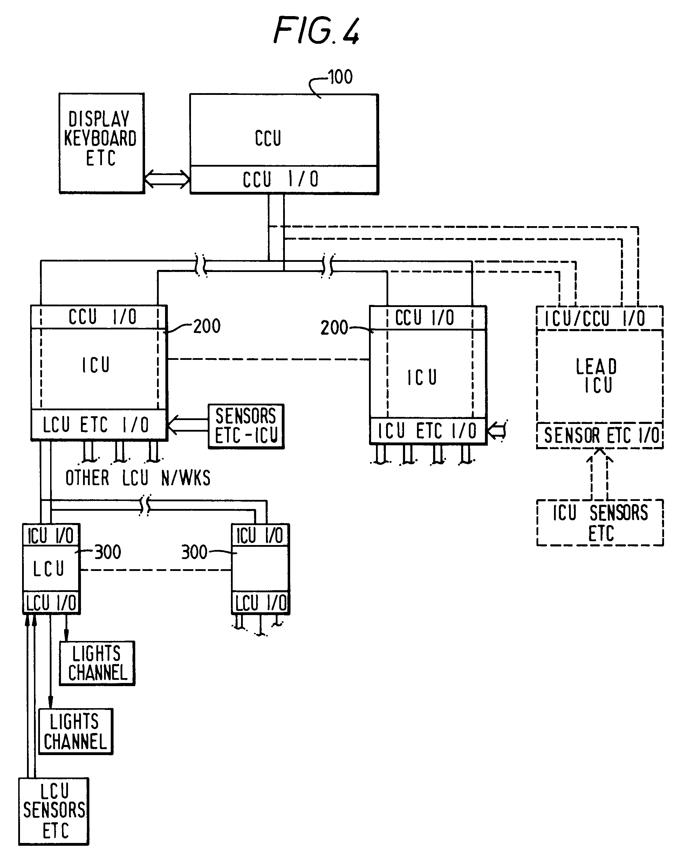

Figure 4 summarises more of just described hierarchical apparatus features for central, intermediate and local control units (100, 200, 300) and communications therebetween via input output (I/O) provisions that, where required, also service local and intermediate sensors etc inputs and central display/keyboard provisions.

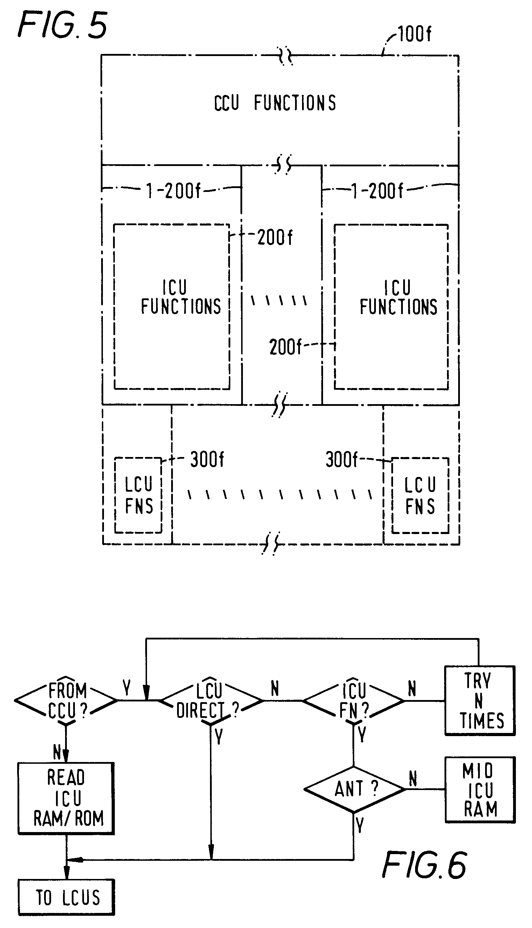

Figure 5 is a function diagram indicating a particular division of programmed control between the central, intermediate and local control units, see chain-dash, long-dash and short-dash boxes 100F, 200F and 300F respectively. Such control division within the apparatus hierarchy can, of course, correspond to what is shown in Figure 4 and as described for Figures 1 to 3, or may represent some other division aimed at each of the units 100, 200, 300 operating within sensible and practical criteria for those units in terms both of evening out work-loads thereof and achieving fast responses for all controlled circuits, particularly lighting circuits.

In addition, Figure 5 shows possible overlap of control functions between the central, intermediate and local control units 100, 200 and 300. Chain-dot lines 1-200F represent overlap between functions controllable by the intermediate control units 200 and also controllable by the central control unit 100 indicated as being up to a maximum where there are no intermediate control functions that cannot be effected by the central control unit 100, i.e including all those (200F) of intermediate control units relative to the controlled circuits and response to sensors etc associated with the intermediate units 200.

There can be any desired,lesser provision for such overlap between functions (100F and 200F), i.e from little to most if not all of intermediate control functions 200F (but with at least. signal sending etc for intermediate sensors etc normally remaining with the intermediate control units 200, possibly or desirably also operation as refining modifiers for then-more basic control functions from the central control unit 200). However, only some of such overlap of functions will be taken up into the central control unit 100 in any particular installation and tat may vary for different ones of the intermediate units 200, say for special function provisions and/or evening up of work/flow and duty cycles of the units 100, 200.

Short-dash lines 1-300 similarly show possible overlap of central control unit functions (100F) to local control units functions (100F), which could be the case (say via the intermediate control units 200) regardless of extent of overlap provisions (1-200F) between the central and the intermediate units 100, 200.

In overlap situations, the central control unit 100 can set it.self, say using flags, to be active or inactive relative to junctions concerned, all according to how itself set up and configured for a particular controlled installation. Figure 6 shows general flow-diagram provisions for each intermediate unit 200 and up to all of intermediate control unit junctions being set up for control at the intermediate unit 200 concerned or by the central control unit 100, including on an Interrupt or over-ride basis or on a re-write or up-date basis for intermediate unit functions as set up.

## Claims

1. A mains electrical installation control system for electrical circuits of the overall mains electrical lighting installation, characterised by intermediate control units (200) between central (100) and local (300) control units, and wherein the system comprises microprocessor-based said local control units (300) each programmed or programmable to afford control functions required or desired for electrical lighting circuits (at 308) associated therewith, microprocessor-based said intermediate control units (200) each programmed or programmable to afford required or desired control functions common to plural said local control units (110) associated by a communication provision (210) with the intermediate control unit (200) concerned, and a microprocessor-based central control unit (100) programmed or programmable to afford control functions required or desired for the intermediate control units (200) associated by a communication provision (110) with the central control unit (100); all said control units (100,110,200,210,300) to cooperate in operation of the electrical lighting circuits (308) of the installation with a response time less than for direct and referred control of the lighting circuits by the central control unit.

2. A mains electrical installation control system according to claim 1, wherein each of the intermediate control units (200) includes read-only and non-volatile read-write (202) memory provisions for program and/or information data required for operation of the intermediate control unit concerned.

3. A mains electrical installation control system according to claim 2, wherein the non-volatile read-write memory provision (202) is writable from the central control unit or separately through a specific write port provision (206) of the intermediate control unit (200).

4. A mains electrical installation control system according to claim 1, 2 or 3, wherein the communication provision (110) between the central (100) and intermediate control units (200) is of two-wire serial type.

5. A mains electrical installation control system according to any preceding claim, wherein each of the local control units (300) has non-volatile read-write memory provision (302) writable at least through a specific write port (301) of the local control unit concerned, but then only readable in normal operation.

6. A mains electrical installation control system according to any preceding claim, wherein said associated local control units (300) have a two-wire serial communication connection network (210) including the intermediate control unit (200) associated therewith.

7. A mains electrical installation control system according to claim 6, wherein each of the intermediate control units (200) has output ports (from 232A-D) for servicing a plurality of said networks, respectively.

8. A mains electrical installation control system according to any preceding claim, wherein programmable capabilities of the central control unit (100) overlap with those of at least some of the intermediate control units (200) and actual programming for the installation concerned is selective within such overlaps.

9. A mains electrical installation control system according to any preceding claim, wherein programmable capability of the central control unit (100) includes effectively direct communication and control of at least some of the local control units (308) through the intermediate control unit or units (200) concerned.

10. A mains electrical installation control system according to claim 8 or claim 9, wherein at least the central control unit (100) has interrupt control provision relative to at least some of the intermediate control units (200).
